Europäisches Patentamt

**European Patent Office**

Office européen des brevets

(11) Publication number : **0 196 685
B1**

# (12) EUROPEAN PATENT SPECIFICATION

(45) Date of publication of patent specification :
09.08.89

(21) Application number : **86200187.2**

(22) Date of filing : **11.02.86**

(51) Int. Cl.⁴ : **B 65 G 57/18, B 25 J  9/00**

(54) Packager.

(30) Priority : **07.03.85 IT 8334185**

(43) Date of publication of application :
**08.10.86 Bulletin 86/41**

(45) Publication of the grant of the patent :
**09.08.89 Bulletin 89/32**

(84) Designated contracting states :
**AT BE CH DE FR GB LI LU NL SE**

(56) References cited :
**DE—A— 3 308 474
DE—B— 1 198 287
FR—A— 2 189 290
GB—A— 1 084 706
US—A— 4 356 554**

(73) Proprietor : **DANIELI & C. OFFICINE MECCANICHE
S.p.A.**
**Via Nazionale, 19**
**I-33042 Buttrio (UD) (IT)**

(72) Inventor : **Nonini, Geremia**
**Via D'Orzano 2**
**I-33042 Buttrio (UD) (IT)**

(74) Representative : **Petraz, Gilberto Luigi**
**G.L.P. S.a.s. di Gilberto Petraz P.le Cavedalis 6/2**
**I-33100 Udine (IT)**

Jouve, 18, rue St-Denis, 75001 Paris, France

## Description

This invention concerns a packager according to the preamble of claim 1. To be more exact, the invention concerns a packager of a type able to take from a delivery line layers of bars or sections alternately right-side-up and upside-down, or all right-side-up or all upside-down, and to package them on a removal conveyor.

Such a packager is known, for example, from document DE-B-1 198 287.

Many more or less complicated embodiments to accomplish this purpose are known in the art. The majority of such embodiments employs a complicated system of arms normally connected together mechanically by transmission shafts so as to use one single actuation system. Such arms bear magnetic heads to take the rolled stock which is to be placed in super-imposed layers. Embodiments are also known in which the engagement and movement of the rolled sections or bars are performed by several cooperating arms or several cooperating magnetic heads.

For instance, GB-A-1 084 706 discloses a packager device in which layers of sections moving along a conveyor can be formed on one or another of two magnetic heads positioned in series. The magnetic head located further downstream of the two heads serves to deposit layers of sections upside-down on a collector surface, such sections being overturned by 180° as compared to their orientation while on the conveyor. The magnetic head located further upstream serves, instead, to overturn a layer of sections by 180° for the first time so as to take them upside-down to the downstream magnetic head, which in its turn overturns such layer again by 180°, as described earlier, and deposits it right-side-up. In this way an alternation can be obtained with layers right-side-up or upside-down as required. However, this device requires two sets of magnetic heads cooperating in series, one behind the other, and entails downtimes due to the overturning of one or both of the heads to provide for layers to be deposited upside-down or right-side-up respectively.

FR-A-2 189 290 discloses a device able to take sections from a conveyor and lay them on a stacker truck. This device comprises a parallelogram-shaped articulated arm for to-and-fro movement; on this arm is located a magnetic turret which can move vertically to take and deposit the sections. This system requires overturning means on a conveyor to overturn sections which are to be laid upside-down, and is able to take the sections only from above.

DE-B-1 198 287 discloses an overturning device equipped with a magnetic head. Such device is able to take a layer of sections on a conveyor from below, lift the layer, overturn it and lay it again on the conveyor. In this way the same conveyor can remove layers of sections right-side-up or upside-down, but this device is not a packager in the true sense of the word but is only an overturning device. Furthermore, each time that the machine has to engage a layer of products from below the conveyor, the latter must be first stopped in order to allow the passage of the arms carrying the magnetic heads under the conveyor's level.

DE-A-3 308 474 discloses an articulated arm operated by means of cables and pulleys, and does not concern a packager in particular.

US-A-4 356 554 discloses a system to control industrial robots and shows a possible embodiment of an articulated arm.

The known embodiments are generally very complicated from a mechanical and constructional point of view, firstly because the actuation systems are complicated and secondly because it is necessary to synchronise the various movements, the synchronisation being generally performed by mechanical devices, and also because it is difficult to make the operation very regular and capable of being reproduced in an excellent manner.

An object of the invention is to simplify the construction of a packager of this type. Another object of the invention is to provide a packager allowing a continuous working of the conveyors. These objects are attained by a packager according to claim 1. The set of arms is equipped with one single series of magnetic heads as a means to transfer the rolled stock between a delivery line and the removal line of a package of rolled bars. Such set of arms acts according to a programme, with a perfect reproduction of the operation. Each of such arms bears at least one magnetic head, which according to the invention can engage the rolled stock from above or from below and can place it, either right-side-up or upside-down, on a stationary removal station.

We shall now describe a preferred embodiment of the invention as a non-restrictive example with the help of the attached figures, in which:

Fig. 1 shows in a very diagrammatic manner a three-dimensional overall view of a packager according to the invention;

Fig. 2 gives a side view of the method of working of the packager.

In the figures a packager 10 comprises in a known manner a delivery line consisting of a plurality of parallel conveyors 11, which are, for instance, conveyor belts or roller conveyors.

Such conveyors 11 deliver rolled bars or sections 12 and comprise at their ends retractable abutments 13 to form layers which are to be superimposed on one another.

In the example shown a set of articulated arms 14 equipped with magnetic heads 15 is positioned in correspondence with the conveyors 11. In this case each arm 14 faces one of the conveyors 11.

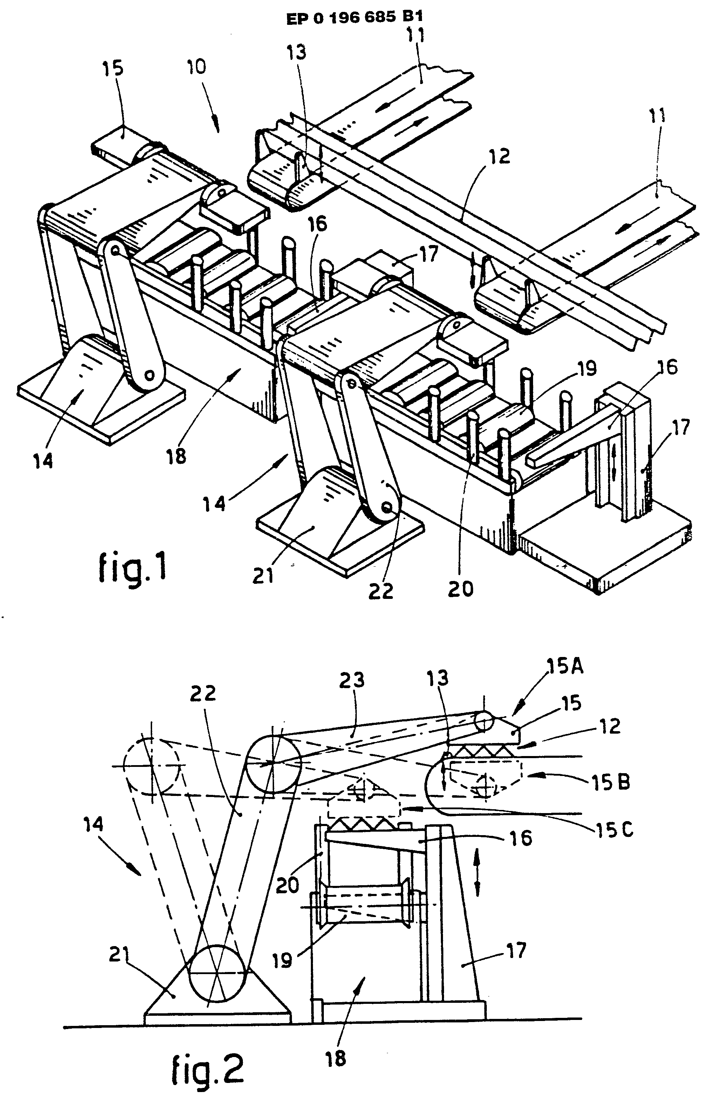

As can be seen in the diagram of Fig. 2, the magnetic heads 15, which are aligned with each other and form one single series of heads, are able to take the layers of sections 12 from above (position 15A) or from below (position 15B) and to deposit such layers 12 at a placement position 15C.

Such position 15C is stationary according to the invention. In fact, temporary support arms 16 are provided which can slide vertically in upright guides 17 and descend on each occasion when a layer of sections 12 is deposited, so that the placement position 15C remains stationary.

The support arms 16 lie initially in correspondence with the placement position 15C and descend progressively as the stack of superimposed layers is formed, so that the magnetic head 15 merely has to deposit the layers 12 always at the same position 15C.

When a package has been completed, the support arms 16 descend in their downward movement below the level of removal means 18, which in this example consist of a roller conveyor with horizontal rollers 19 and vertical rollers 20.

The vertical rollers 20 have the task of obviating lateral displacements of the rolled bars or sections 12 forming the package to be removed.

Each arm 14 comprises a forearm 23 which bears the magnetic head 15, and an arm 22 which supports rotatably the forearm 23 and is pivoted on a stationary base 21.

It should be noted in particular that the employment of arms 14 with one single series of heads 15 makes possible a very fast operational sequence, particularly because the engagement positions 15A-15B and placement position 15C are stationary, and there is no prior overturning of the sections and therefore no waiting before engagement of the layer.

The overturning of the layers 12 to be deposited upside-down takes place after they have been engaged at 15B and can occur at the same time as they are transferred from 15B to 15C.

The invention can deposit either wholly right-side-up layers by engagement at 15A and placement at 15C, or wholly upside-down layers by engagement at 15B and placement at 15C, or alternate right-side-up and upside-down layers by alternate engagement at 15A and 15B.

Such operating versatility can be obtained by merely changing the programme of the arms 14.

The various arms 14 will be synchronised preferably with each other electronically.

It is possible to provide an arm structured otherwise than as shown, and differently articulated and/or with a greater number of degrees of freedom, for instance ; it is possible to provide one or more cooperating magnetic heads supported and aligned by each arm ; it is possible to provide a conformation of such arms 14 and of the magnetic heads 15 other than that shown, without departing thereby from the scope of this invention as defined by the appended claims.

## Claims

1. Packager (10) which comprises at least one delivery line with conveyors (11) and with movable abutments (13) to form layers of rolled stock (12), removal means (18) that serve also to form stacks of such rolled stock (12) and movable arms (14) with magnetic heads (15), such packager (10) being able to take layers of rolled stock (12) which are all right-side-up (15A) or are all upside-down (15B), or are alternately right-side-up and upside-down, said arms (14) with magnetic heads (15) having an upper engagement position (15A) and a lower engagement position (15B) to engage the rolled stock (12), there being one single series of heads (15) able to take the rolled stock right-side-up (15A) and to overturn it, as required, with a rotation of 180° after having taken it, characterised in that each arm (14) comprises a forearm (23) bearing a magnetic head (15) and another arm (22) which supports rotatably said forearm (23) and which is pivotably supported on a stationary base (21) and in that said magnetic heads (15) engage said layers of rolled stock (12) either from above or from below the level of said conveyors (11) without interfering with the continuous advancing movement of said rolled stock on said conveyors.

2. Packager (10) as claimed in Claim 1, in which each arm (14) carries at least one magnetic head (15).

3. Packager (10) as claimed in anyone of the preceding claims, in which the position (15C) for placement of the rolled stock (12) is stationary.

4. Packager (10) as claimed in anyone of the preceding claims, in which the movement of said arms (14) is synchronized.

## Patentansprüche

1. Paketiervorrichtung (10) mit zumindest einer Förderstraße mit Förderern (11) und mit bewegbaren Widerlagern (13) zum Bilden von Schichten von Walzgut (12), mit Mitteln zum Abtransport (18), die auch zum Stapelbilden solchen Walzgutes dienen und mit bewegbaren Armen (14) mit Magnetköpfen (15), wobei die Paketiervorrichtung (10) Schichten von Walzgut (12), die sich alle mit der richtigen Seite nach oben (15A) oder die sich alle verkehrt herum (15B) befinden, oder die sich abwechselnd mit der richtigen Seite nach oben und verkehrt herum befinden, ergreifen kann, die Arme (14) mit Magnetköpfen (15) eine obere Angreifstellung (15A) und eine untere Angreifstellung (15B) zum Ergreifen des Walzgutes (12) aufweisen, wobei eine einzige Reihe von Köpfen (15) vorgesehen ist, die das Walzgut mit der richtigen Seite nach oben liegend (15A) ergreifen können und, nach Bedarf, es nach dem Ergreifen um 180° wenden können, dadurch gekennzeichnet, daß jeder Arm (14) einen Vorderarm (23), der einen Magnetkopf (15) trägt und einen anderen Arm (22) aufweist, welcher den Vorderarm (23) drehbar trägt und schwenkbar in einem unbeweglichen Sitz (21) gehalten wird, und daß die Magnetköpfe (15) die Schichten von Walzgut (12) entweder von oben her oder von unten her bezüglich der Höhe der Förderer (11) ergreifen, ohne die kontinuierliche Vorrückbewegung des Walzgutes auf den Förderern zu stören.

2. Paketiervorrichtung (10) nach Anspruch 1, bei welcher jeder Arm (14) zumindest einen Magnetkopf (15) trägt.

3. Paketiervorrichtung (10) nach irgendeinem der vorhergehenden Ansprüche, bei welcher die Stellung (15C) zum Hinlegen des Walzgutes (12) stationär ist.

4. Paketiervorrichtung (10) nach irgendeinem der vorhergehenden Ansprüche, bei welcher die Bewegung der Arme (14) synchronisiert ist.

## Revendications

1. Formateur de paquets (10), qui comporte au moins une ligne d'amenée avec convoyeurs (11) et avec butées mobiles (13) pour constituer un stock de couches de laminés (12), des moyens de transfert (18) servant également à former des piles de tels produits laminés (12) et des bras mobiles (14) avec des têtes magnétiques (15), un tel formateur de paquets (10) étant en mesure de prendre un stock de couches de laminés (12) qui sont tous à l'endroit (15A) ou tous sens dessus-dessous (15B) ou qui sont en alternance à l'endroit ou sens dessus-dessous, lesdits bras (14) avec des têtes magnétiques (15) ayant une position de saisie par le haut (15A) et une position de saisie par le bas (15B) pour saisir le stock de laminés (12), comportant une série unique de têtes (15) qui est en mesure de prendre le stock de laminés à l'endroit (15A) et de lui faire subir, si nécessaire, une rotation de 180° après l'avoir saisi, caractérisé en ce que chaque bras (14) comporte un avant-bras (23) portant une tête magnétique (15) et un autre bras (22) qui supporte en rotation ledit avant-bras (23) et qui est supporté pivotant par un socle stationnaire (21) et en ce que lesdites têtes magnétiques (15) saisissent lesdites couches de laminés (12) soit par dessus, soit par dessous du niveau desdits convoyeurs (11), sans interférence avec l'avance continue dudit stock de laminés sur lesdits convoyeurs.

2. Formateur de paquets (10) suivant la revendication 1, dans lequel chaque bras (14) porte au moins une tête magnétique (15).

3. Formateur de paquets (10) suivant l'une quelconque des revendications précédentes, dans lequel la position (15C) de dépôt du stock de laminés (12) est stationnaire.

4. Formateur de paquets (10) suivant l'une quelconque des revendications précédentes, dans lequel le mouvement desdits bras (14) est synchronisé.

fig.1

fig.2